# EUROPEAN PATENT APPLICATION

(11) **EP 3 015 529 A1**
(43) Date of publication of application: **04.05.2016**
(21) Application number: 15191506.3
(22) Date of filing: 26.10.2015
(51) Int. Cl.: C09K 11/61

(54) **RED PHOSPHOR**

(30) Priority: 30.10.2014 JP 2014220993
(71) Applicant: Shin-Etsu Chemical Co., Ltd., Chiyoda-ku Tokyo (JP)
(72) Inventor: KANEYOSHI, Masami, Echizen-shi, Fukui (JP)
(74) Representative: Stoner, Gerard Patrick

(57) **Abstract**

A red phosphor has a peak of emission spectra of 600 and 650 nm, a peak width of up to 10 nm, and a fluorescence lifetime of at least five milliseconds at room temperature and is made of a Mn-activated complex fluoride phosphor represented by the following formula (1):

K₂SiF₆:Mn (1)

wherein an amount of Mn is up to 10 mol% relative to the sum of Mn and Si.

## Description

### TECHNICAL FIELD

This invention relates to a red phosphor (complex fluoride phosphor) useful for white LEDs.

### BACKGROUND

For the purposes of improving color rendering properties of white LEDs (light emitting diodes) or improving color reproducibility in the case where a white LED is used as a backlight of liquid crystal displays, a phosphor has been needed that is excited with light corresponding to near-ultra violet to blue LEDs and is able to emit red light, and studies for this have been in progress. In particular, Patent Document 1 (JP-T 2009-528429 corresponding to WO 2007/100824) describes usefulness of a phosphor (complex fluoride phosphor) wherein Mn is added to a complex fluoride represented by A₂MF₆ wherein A represents Na, K, Rb or the like, and M represents Si, Ge, Ti or the like.

On the other hand, so-called light modulation wherein emission intensity of LEDs is changed has been recently performed. One light modulation method is called pulse width modulation (PWM), wherein a pulsed current is passed and a ratio of light-on and light-off times is changed on the basis of the pulse widths, thereby controlling light quantity as described in Patent Document 2 (JP-A 2009-99701 corresponding to US 2009/096724 (A1)). In such a purpose, we note that since the way of how an irradiated object is seen from the side of a person should be constant, a relatively longer emission continuous time (fluorescence lifetime) after excitation of a phosphor is better in the sense that light during lights-out of a blue LED (serving as a white LED excitation source) is compensated for.

### THE INVENTION

An aim herein is to provide a red phosphor having a long fluorescence lifetime useful for white LEDs.

In order to achieve the above object, we made intensive studies and, as a result, found that a Mn-activated complex fluoride phosphor having a specific type of composition shows a long fluorescence lifetime and requirements therefore have been investigated thereby completing the invention.

More particularly, the invention contemplates to provide:
a red phosphor, characterized in that a peak of emission spectra is between 600 and 650 nm, a peak width is up to 10 nm, and a fluorescence lifetime at room temperature is at least five milliseconds.

In the red phosphor, manganese is preferably contained as an emission element.

In the preferred red phosphor as specified above, and as an independent proposal of red phosphor for uses disclosed herein, the phosphor is made of a Mn-activated complex fluoride phosphor represented by the following formula (1):

K₂SiF₆:Mn (1)

wherein an amount of Mn is up to 5 mol% relative to the sum of Mn and Si.

In the red phosphor, when the phosphor is excited with blue light within a range of 430 to 470 nm, an internal quantum efficiency is preferably at least 0.8.

The red phosphor disclosed herein is found to have an effect of suppressing a change of light quantity and a long fluorescence lifetime when used for white LEDs and subjected to pulsed lighting, and has a good emission efficiency. This use is an aspect of the invention.

### BRIEF DESCRIPTION OF THE DRAWINGS

Fig. 1 is a view showing fluorescent spectra and fluorescent excitation spectra of a red phosphor of the invention; and
Fig. 2 is a view showing an emission decay curve of a red phosphor embodying the invention.

### FURTHER EXPLANATIONS; OPTIONS AND PREFERENCES

The red phosphor proposed herein is now described and discussed.

The red phosphor should have an emission spectral peak of 600 to 650 nm, a peak width up to 10 nm, and a fluorescence lifetime at room temperature is at least five milliseconds.

The red phosphor should preferably contain manganese as an emission element.

The red phosphor of the invention is preferably made of a Mn-activated complex fluoride phosphor represented by the following of formula (1):

K₂SiF₆:Mn (1)

wherein an amount of Mn is up to 5 mol% of the sum of Mn and Si.

Moreover, the red phosphor of the invention should preferably have an internal quantum efficiency of at least 0.8 when excited with blue light within a range of 430 to 470 nm.

For the red phosphor, it is favorable that the emission peak is within a range of 600 to 650 nm and an emission peak width is up 10 nm. With a wavelength shorter than 600 nm, the color is close to orange. When exceeding 650 nm, sensitivity to human eyes becomes poor. A wide peak width means that light in the region of orange and infrared wavelengths is contained, and thus color purity may be poor or unnecessary regions where visibility is low may be substantially included.

The fluorescence lifetime is determined in such a way that a sample is applied with a pulsed excitation light within a very short time, and a variation of fluorescence emitted from the sample with time is subsequently analyzed. In general, a time required to reach initial 1/e (wherein e is the base of natural logarithm) is called fluorescence lifetime.

The pulse period well used in PWM is at about 0.1 to 50 milliseconds, preferably at about one to ten milliseconds. When using a phosphor having a fluorescence lifetime at least those indicated above, light emission is considered to be left at the time of lights out of an excitation source thereby enabling light reduction to be mitigated. In this sense, a red phosphor having a fluorescence lifetime of at least five milliseconds is useful.

The phosphor capable of attaining the purpose of the invention should preferably contain tetravalent manganese (Mn⁴⁺). Known red phosphors include those activated with divalent europium (Eu²⁺) and those activated with trivalent europium (Eu³⁺). An Eu²⁺ phosphor usually has a fluorescence lifetime as short as about 1 to 10 microseconds. Although an Eu³⁺ phosphor exhibits a long fluorescence lifetime, a difficulty is involved in efficient emission with light within a range of blue LED wavelengths. Many phosphors activated with trivalent cerium (Ce³⁺) are known, a number of which can be excited with blue light. With the typical product Y₃Al₅O₁₂:Ce (YAGCe), the fluorescence lifetime is still shorter and is at about 10 nanoseconds. The emission peak wavelength of Ce³⁺ phosphor varies depending on the type of matrix to be added and is in a yellow region for YAGCe but may be changed to in a red region. In this regard, however, the feature of the short fluorescence lifetime is held (Phosphor Handbook published by Ohmsha, Ltd., edited by Phosphor Research Society, 1987, pp. 104-105, 116-120).

Several phosphors using Mn⁴⁺ as an emission center are known, among which K₂SiF₆:Mn is one wherein when blue light is used as an excitation source, it is likely to obtain a phosphor having a good emission efficiency. Moreover, the amount of Mn is preferably up to 10 mol% relative to the sum of Mn and Si. More preferably, the amount is up to 5 mol%. When the amount exceeds 10 mol%, the fluorescence lifetime may become short, and a still higher amount brings the concern that emission efficiency lowers. This amount (ratio) of Mn substantially has no lower limit but is preferably at least 0.1 mol%. With an amount of less than 0.1 mol%, the absorption of excitation light usually becomes too weak.

As set out above, although the fluorescence lifetime of a phosphor depends greatly on the type of element serving as an emission center and its state of being and also on the type of matrix, it may also be influenced by purity and the manner of preparation. For instance, if there is a great possibility of losing energy without light emission under excitation conditions by the influence of an impurity or crystal defects, the attenuation of fluorescent light becomes fast. In other words, the fluorescence lifetime may be shortened.

Although the method of preparing the phosphor of the invention is not critical, it is desirable to use a method wherein elements other than specified constituent elements in a final product are unlikely to be incorporated as far as possible, i.e. a method wherein such elements are not used or are absent as far as possible or are minimized in amount.

In this case, in order to set the amount of Mn at a level of up to 10 mol% of the sum of Mn and Si, it is preferred, as shown in the examples appearing hereinafter, that when K₂MnF₆, prepared beforehand, is reacted with a silicon source such as silicon fluoride, the amount of K₂MnF₆ and/or the amount of Si is controlled by appropriate selection thereof. The content of Mn in the product may be influenced not only by an amount ratio in a reaction system, but also by preparation conditions.

### EXAMPLES

Examples and Reference are shown to more particularly illustrate the invention, which should not be construed as limited thereto.

### Reference

### Preparation of K₂MnF₆

In accordance with a method described in New Experimental Chemical Course "Syntheses of Inorganic Compounds III", published by Maruzen Co., Ltd., edited by The Chemical Society of Japan, 1977, page 1166, this compound was prepared (synthesized) in the following way.

A partition of a fluorine resin-based ion exchange membrane (partition membrane) was provided at the center of a reaction vessel made of a polyvinyl chloride resin, and an anode and a cathode, each made of a platinum plate, were set in the two chambers sandwiching the ion exchange membrane therebetween. A hydrofluoric acid aqueous solution dissolving manganese (II) fluoride therein was placed at the anode side of the reaction vessel and a hydrofluoric acid aqueous solution was placed at the cathode side. Both electrodes were connected, followed by electrolysis at a voltage of 3 V and an electric current of 0.75 A. After completion of the electrolysis, a hydrofluoric acid aqueous solution saturated with potassium fluoride was added, in excess, to the reaction solution at the anode side. The resulting yellow solid product was separated by filtration and collected to obtain K₂MnF₆.

### Example 1

1,000 cm³ of 70 wt% of hydrofluoric acid (70% HF, i.e. highly concentrated 70% hydrofluoric acid, made by Morita Chemical Industries Co., Ltd.) was placed in a three liter polyethylene beaker and immersed in a water bath into which an antifreeze fluid was charged and which was cooled with a throw-in cooler, under which while cooling from outside, 48 g of silicon dioxide (Aerosil 90, made by Nippon Aerosil Co., Ltd.) was added portion by portion (with care because of exothermic reaction) for dissolution. 11.9 g of K₂MnF₆ powder prepared in Reference was added to and dissolved in the resulting solution under agitation to prepare an aqueous solution containing silicon fluoride and K₂MnF₆ (first solution). Separately, 500 cm³ of 70% HF was placed in a one-liter polyethylene beaker and while cooling in a similar way as mentioned above, 187.4 g of hydrogen potassium fluoride (KHF₂, acidic potassium fluoride, made by Stella Chemifa Corporation) was added portion by portion and dissolved (second solution). The first and second solutions were both cooled down to about 0°C. While agitating the first solution, the second solution was added thereto over a period of one minute, followed by agitation for about ten minutes. A light orange solid was formed. This solid product was separated by filtration, followed by washing with a small amount of 70% HF and further with anhydrous hydrofluoric acid (made by Morita Chemical Industries Co., Ltd.) in such a small amount (about 100 cm³) sufficient to permit the filtered precipitate to be wholly wetted. Moreover, the product was washed with a small amount of acetone and vacuum-dried to obtain 142.4 g of a product.

From powder X-ray diffraction, it was confirmed that the product obtained in this manner had a crystal structure corresponding to K₂SiF₆. Part of the product was sampled and completely dissolved in dilute hydrochloric acid, followed by subjecting to inductively couple plasma (ICP) emission spectroscopic analysis to analyze the content of Mn, revealing that the content was 0.71 wt%. The content of Si was found to be at 12.3 wt%. When calculating from these values, Mn is contained at 2.86 mol% relative to the sum of Mn and Si. The size distribution of the resulting product was measured by means of a size distribution measuring instrument (Helos & Rodos, made by Sympatec GmbH) based on an air dispersion laser diffraction method. As a result, it was found that particles having a size of up to 19.7 µm occupied 10% of the total volume (D10 = 19.7 µm), particles having a size of up to 38.3 µm occupied 50% of the total volume (D50 = 38.3 µm), and particles having a size of up to 56.4 µm occupied 90% of the total volume (D90 = 56.4 µm).

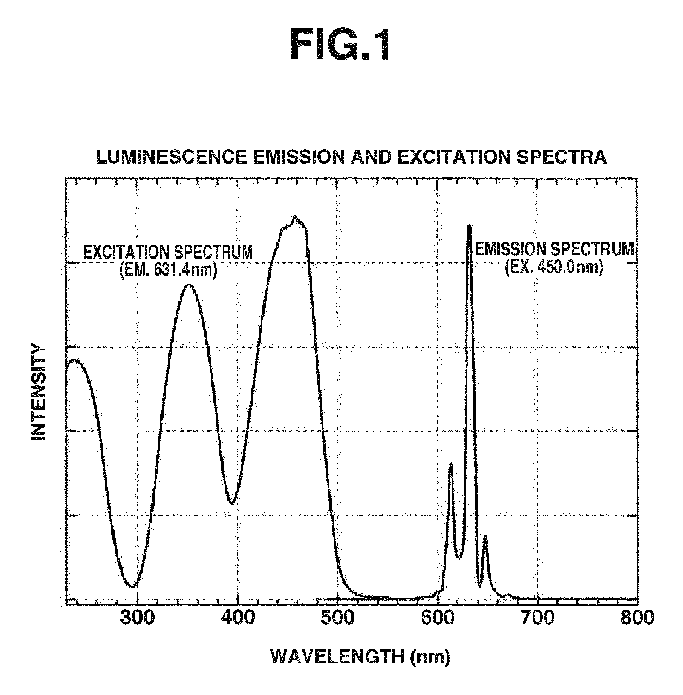

The emission spectra and excitation spectra of the product were measured by use of a fluorophotometer FP6500 (made by Jasco Corporation) with the results shown in Fig. 1. The maximum peak of the emission spectra was at 631.4 nm with its width (a half-value width measured at a position corresponding to a half of the peak height) being at 3.8 nm. Using a quantum efficiency measuring device QE1100 (made by Otsuka Electronics Co., Ltd.), the absorption rate and quantum efficiency at an excitation wavelength of 450 nm were measured. The results are shown in Table 1. The absorption rate was 0.776 and the internal quantum efficiency was 0.882.

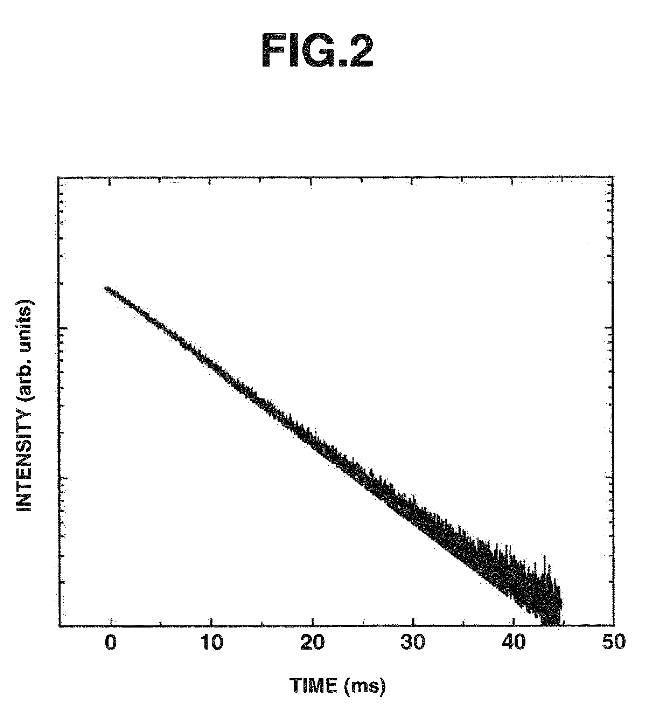

The emission attenuation behavior of the product was measured by use of fluorescence lifetime measuring instrument Quantaurus-Tau C11367-04, made by Hamamatsu Photonics K.K. The measurement was performed at room temperature using excitation light of 405 nm. The results are shown in Fig. 2. The analyses of these results revealed that the fluorescence lifetime was 8.75 milliseconds.

### Example 2

The general procedure of Example 1 was repeated except that while keeping the amount of 70% HF as in the example, the amounts of the other starting materials (SiO₂, K₂MnF₆ and KHF₂) were reduced to 60% of the amounts in Example 1 thereby obtaining 72.7 g of a phosphor. In the same manner as in Example 1, the analysis of the amount of Mn and measurement of light emission were carried out. The results are shown in Table 1 along with those of Example 1.

### Example 3

The general procedure of Example 1 was repeated except that the amount of K₂MnF₆ was reduced to half to obtain 139.7 g of a phosphor. In the same manner as in Example 1, the analysis of the amount of Mn and measurement of light emission were carried out. The results are shown in Table 1 along with those of Example 1.

**Table 1**

| | Maximum emission peak position /nm | Maximum emission peak width /nm | Absorption rate at 450 nm | Internal quantum efficiency | Fluorescence lifetime /millisecond | Mn/(Mn+Si) (mol%) |
|---|---|---|---|---|---|---|
| Example 1 | 631.4 | 3.8 | 0.776 | 0.882 | 8.75 | 2.86 |
| Example 2 | 631.4 | 3.8 | 0.773 | 0.895 | 8.95 | 2.77 |
| Example 3 | 631.4 | 3.8 | 0.697 | 0.904 | 8.76 | 1.51 |

### Notes

Japanese Patent Application No. 2014-220993, the priority of which is claimed, is incorporated herein by reference as a precaution.

Although some preferred embodiments have been described, many modifications and variations may be made thereto in light of the above teachings. It is therefore to be understood that the invention may be practised otherwise than as specifically described without departing from the scope of the general teachings herein or the appended claims.

In respect of numerical ranges disclosed in the present description it will of course be understood that in the normal way the technical criterion for the upper limit is different from the technical criterion for the lower limit, i.e. the upper and lower limits are intrinsically distinct proposals.

For the avoidance of doubt it is confirmed that in the general description above, in the usual way the proposal of general preferences and options in respect of different features of the phosphor and use constitutes the proposal of general combinations of those general preferences and options for the different features, insofar as they are combinable and compatible and are put forward in the same context.

## Claims

1. A red phosphor having a peak of the emission spectrum between 600 and 650 nm, the peak width being not more than 10 nm, and the fluorescence lifetime at room temperature being at least five milliseconds.

2. A red phosphor of claim 1 containing manganese as emission element.

3. A phosphor of claim 1 or 2 made of Mn-activated complex fluoride phosphor represented by the following formula (1):
K₂SiF₆:Mn (1)
wherein the amount of Mn is not more than 5 mol% relative to the sum of Mn and Si.

4. A red phosphor of any one of claims 1 to 3 which, when excited with blue light within a range of 430 to 470 nm, exhibits an internal quantum efficiency of at least 0.8.

5. Use of a red phosphor of any one of claims 1 to 4 by exciting it with a blue LED as excitation source.

6. Use according to claim 5 in which the blue LED excitation source is pulsed.

7. Use according to claim 6 in which the excitation source is subject to pulse width modulation.
